# EUROPÄISCHE PATENTSCHRIFT

(11) **EP 3 105 525 B1**
(45) Veröffentlichungstag und Bekanntmachung des Hinweises auf die Patenterteilung: **12.09.2018**
(21) Anmeldenummer: 15700741.0
(22) Anmeldetag: 21.01.2015
(51) Int. Cl.: F28F 9/12, F02B 29/04, F28F 9/16, F28F 21/06, F28F 21/08

(54) **LADELUFTKÜHLER FÜR EINE FRISCHLUFTANLAGE EINER BRENNKRAFTMASCHINE**
CHARGE-AIR COOLER FOR A FRESH-AIR SYSTEM OF AN INTERNAL COMBUSTION ENGINE
REFROIDISSEUR D'AIR DE SURALIMENTATION POUR SYSTÈME D'AIR FRAIS D'UN MOTEUR À COMBUSTION INTERNE

(30) Priorität: 11.02.2014 DE 102014202466
(43) Veröffentlichungstag der Anmeldung: 21.12.2016
(73) Patentinhaber: MAHLE Behr GmbH & Co. KG, 70469 Stuttgart (DE)
(72) Erfinder: HOHMANN, Ellen, 75181 Pforzheim (DE); ISERMEYER, Tobias, 74245 Löwenstein (DE); RÖSCHMANN, Timm, 71154 Nufringen (DE)
(74) Vertreter: BRP Renaud & Partner mbB Rechtsanwälte Patentanwälte Steuerberater
(86) Internationale Anmeldenummer: PCT/EP2015/051124
(87) Internationale Veröffentlichungsnummer: WO 2015/121038

(56) Entgegenhaltungen:
- EP-A1- 1 762 806
- EP-A2- 2 088 299
- DE-A1-102009 015 467
- DE-A1-102009 055 715
- DE-C1- 19 536 300
- FR-A1- 2 695 466
- US-A- 3 400 755

## Beschreibung

Die Erfindung betrifft einen Ladeluftkühler für eine Frischluftanlage einer Brennkraftmaschine sowie eine Frischluftanlage mit einem solchen Ladeluftkühler. Die Erfindung betrifft ferner eine Brennkraftmaschine mit einer solchen Frischluftanlage.

DE 10 2009 015467 A1 oder DE 10 2009 055715 A1 beschreiben einen Ladeluftkühler mit den Merkmalen im Oberbegriff des Patentanspruchs 1. In modernen Kraftfahrzeugen gewinnen aufgeladene Brennkraftmaschinen zunehmend an Bedeutung, denn mit Hilfe einer solchen Aufladung lässt sich die Leistungsdichte der Brennkraftmaschine erheblich steigern. Es besteht daher die Tendenz, zunehmend auch Fahrzeuge mit kleineren Motoren mit geeigneten Ladeeinrichtungen auszustatten, um auf diese Weise deren Leistung zu steigern bzw. deren Kraftstoffverbrauch zu senken. Ebenso ist die Tendenz zu beobachten, bei gleicher Leistung die Motoren im Sinne eines sog. "Downsizing" zu verkleinern. Aufgeladene Brennkraftmaschinen sind regelmäßig mit einem Ladeluftkühler ausgestattet, um die etwa mit Hilfe eines Abgasturboladers aufgeladene und folglich erhitzte Ladeluft wieder abzukühlen. Eine solche Kühlung der Ladeluft erhöht die Leistung der Brennkraftmaschine, reduziert deren Kraftstoffverbrauch und Schadstoffemissionen und mindert insgesamt die thermische Belastung der gesamten Brennkraftmaschine.
Die Kühlung der Ladeluft erfolgt durch Wärmeübertragung von der Ladeluft an die Umgebung. Dies kann durch einen sog. direkten Ladeluftkühler als Luft-Luft Wärmetransfer oder indirekt durch zusätzliche Verwendung eines Zwischenmediums erfolgen. Als Zwischenmedium wird gemeinhin Kühlwasser verwendet. Bei indirekter Ladeluftkühlung werden mindestens zwei Wärmeübertrager verwendet, typischerweise ein Kühlmittelkühler, der die Wärme vom Kühlmittel an die Umgebung abführt, und ein Ladeluftkühler, der die Wärme der Ladeluft auf das Kühlmittel überträgt. Der indirekte Ladeluftkühler kann dabei beispielsweise aus Flachrohren bestehen, die das Kühlmittel führen und auf der Gasseite zur Verbesserung des Wärmeübergangs mit einer Rippenstruktur verbunden sind, welche einerseits der Abstützung der Flachrohre dient, andererseits aber auch im Ladeluftkühler derart in den Fluidpfad der zu kühlenden Ladeluft integriert ist, dass sie von dieser durchströmt wird. Die gesamte Rippe-Rohr-Struktur kann zwischen zwei sog. Kühlerkästen angeordnet sein, welche fluidisch mit den einzelnen Flachrohren kommunizieren und für die Verteilung von Kühlmittel auf die einzelnen Flachrohre sorgen. Einer der beiden Kühlerkästen dient dabei sowohl zur Verteilung des Kühlmittels auf die Flachrohre als auch zum Sammeln und Ausleiten des Kühlmittels aus dem Ladeluftkühler, nachdem dieses Wärme von der Ladeluft aufgenommen hat. Die beiden Kühlerkästen können dabei an einer gemeinsamen Flanschplatte angebracht sein, welche ein einfaches Einsetzen des gesamten Ladeluftkühlers in ein Gehäuse einer von Ladeluft durchströmten Frischluftanlage erlaubt.

Nach einer solchen Montage des Ladeluftkühlers in der Frischluftanlage kann der der Ein- und Ausleitung von Kühlmittel dienende Kühlerkasten wie oben erwähnt an einen Kühlmittelkreislauf angeschlossen werden. Hierzu ist am Kühlerkasten üblicherweise ein erster Rohrstutzen vorgesehen, welcher fluidisch mit einem ersten Fluidbereich des Kühlerkastens kommuniziert, über welchen das Kühlmittel auf die Flachrohre verteilt wird. Ein ebenfalls am Kühlerkasten vorgesehener, zweiter Rohrstutzen kann mit einem zweiten Fluidbereich kommunizieren, über welchen das Kühlmittel nach dem Wärmetausch mit der zu kühlenden Ladeluft folglich wieder aus dem Kühlerkasten auszutreten vermag.

Aus DE102009055715A1 ist die Lagerung eines indirekten Ladelüftkühlers in einem Saugrohr bekannt.

Die vorliegende Erfindung beschäftigt sich nun mit dem Problem, einen Ladeluftkühlers zu schaffen, der mit einem oder mehreren konstruktiv verbesserten Rohrstutzen zur Ein- und Ausleitung von Kühlmittel in den Kühlerkasten des Ladeluftkühlers ausgestattet ist. Die Erfindung stellt sich ferner die Aufgabe, eine Frischluftanlage mit einem solchen Ladeluftkühler bereitzustellen. Schließlich stellt sich die Erfindung die Aufgabe, eine Brennkraftmaschine mit einer solchen Frischluftanlage zu schaffen.

Die genannten Aufgaben werden durch den Gegenstand der unabhängigen Patentansprüche gelöst. Bevorzugte Ausführungsformen sind Gegenstand der abhängigen Patentansprüche.

Grundgedanke der Erfindung ist demnach, besagten Rohrstutzen zur Ein- bzw. Ausleitung von Kühlmittel in bzw. aus dem Kühlerkasten des Ladeluftkühlers - im Folgenden als Rohrelement bezeichnet - konstruktiv derart auszugestalten, dass er mit einem am Kühlerkasten dauerhaft angebrachten Adapterelement eine Clipverbindung bilden kann, so dass das Rohrelement durch ein einfaches Einclipsen lösbar am Adapterelement befestigt werden kann.

Der erfindungsgemäße Ladeluftkühler ist hierzu mit einem Kühlerkasten versehen, welcher eine Kühlerkasten-Durchgangsöffnung aufweist. Um den gesamten Ladeluftkühler als Einheit in einer Frischluftanlage eines Kraftfahrzeugs montieren zu können, besitzt er ferner eine Flanschplatte, in welcher eine Flanschplatten-Durchgangsöffnung vorgesehen ist, die mit der Kühlerkasten-Durchgangsöffnung fluchtet. Das für die Clipverbindung mit dem Rohrelement erforderliche und einen ersten und zweiten Endabschnitt aufweisende Adapterelement ist mit seinem zweiten Endabschnitt in die Flanschplatten-Durchgangsöffnung eingesetzt und stoffschlüssig mit einem die Kühlerkasten-Durchgangsöffnung einfassenden Rand des Kühlerkastens verbunden. Die erfindungsgemäße Clipverbindung zwischen Adapterelement und Rohrelement erfolgt mit Hilfe der beiden ersten Endabschnitte der beiden Bauteile.

Der erfindungsgemäße Ladeluftkühler gestattet somit eine einfach durchzuführende, separate Montage bzw. Demontage des Rohrelements am Ladeluftkühler, etwa nachdem dieser in eine Frischluftanlage eingebaut wurde. Zudem ist die Verwendung individueller Rohrelemente möglich, die ihrerseits als Adapterbauteile verwirklicht sein können, welche den Anschluss des Ladeluftkühlers an Kühlmittelkreisläufe mit unterschiedlicher Konnektivität gestatten: Hierzu ist es lediglich erforderlich, das Rohrelement im Bereich seines zweiten, dem ersten Endabschnitt gegenüberliegenden Endabschnitts mit einer zum Anschluss an den Kühlmittelkreislauf geeigneten Flanschgeometrie zu versehen. Selbstverständlich kann der erfindungsgemäße Ladeluftkühler nicht nur mit einem einzigen Adapterelement-Rohrelement-Paar ausgestattet sein; vielmehr bietet es sich an, sowohl das Rohrelement zum Einbringen von Kühlmittel in den Kühlerkasten als auch jenes zur Ausleitung des Kühlmittels aus besagten Kühlerkasten in der erfindungsgemäßen Weise zu gestalten.

Gemäß einer bevorzugten Ausführungsform sind Kühlerkasten und Adapterelement aus einem Metall hergestellt. Dies gestattet es, das Adapterelement dauerhaft mittels einer stoffschlüssigen Verbindung am Kühlerkasten zu befestigen.
So kann etwa daran gedacht sein, den zweiten Endabschnitt des Adapterelements am Kühlerkasten anzuschweißen oder anzulöten. Besonders empfiehlt sich aufgrund seines geringen Eigengewichts die Verwendung von Aluminium als Metall zur Herstellung von Kühlerkasten und Adapterelement.

Demgegenüber ist die Flanschplatte besonders zweckmäßig wenigstens im Bereich eines die Flanschplatten-Durchgangsöffnung einfassenden Rands aus Kunststoff hergestellt. Von dieser Variante ausdrücklich umfasst sind Ausgestaltungsformen, bei welchen die Flanschplatte nicht nur im Bereich besagten Randes, sondern nahezu vollständig oder gänzlich aus Kunststoff gefertigt ist. Alternativ oder zusätzlich kann auch das Rohrelement aus einem Kunststoff hergestellt sein. In letzterem Fall können besitzen Rohrelement und Flanschplatte denselben thermischen Ausdehnungskoeffizienten, so dass die beiden betriebsmäßig von Kühlmittel durchströmten und somit erheblichen Temperaturschwankungen ausgesetzten Bauelemente sich in demselben Maße ausdehnen bzw. kontrahieren. Auf diese Weise lassen sich temperaturbedingte, mechanische Spannungen an den Grenzflächen zwischen beiden Bauteilen, welche die fluide Dichtigkeit an der Schnittstelle Rohrelement-Adapterelement in Frage stellen könnten, weitgehend vermeiden. Zudem besitzt Kunststoff für die Ausbildung einer Clipverbindung vorteilhafte federelastische Materialeigenschaften.

Um eine mechanisch stabile Befestigung des Rohrelements am Adapterelement und somit am Ladeluftkühler sicherzustellen, wird vorgeschlagen, die beiden ersten Endabschnitte von Rohrelement und Adapterelement mit einer im Wesentlichen komplementär zueinander ausgestalteten geometrischer Formgebung zu versehen.

Als für die fluidische Ankopplung des Rohrelements an das Adapterelement besonders vorteilhaft erweist sich eine Ausführungsform, bei welcher das Adapterelement einen hohlzylindrischen Grundkörper besitzt; an dessen Außenseite ist dabei eine radial nach außen abstehende und sich entlang der Umfangsrichtung des Grundkörpers erstreckender Rippe angeordnet. Zusätzlich ist am ersten Endabschnitt des Adapterelements ein radial nach außen vom Grundkörper abstehender und sich entlang dessen Umfangsrichtung erstreckender Befestigungskragen angeordnet, welcher zur Ausbildung eine Clipverbindung mit dem Rohrelement dient.

Als für die Ausbildung einer leistungsfähigen Clipverbindung mit dem Adapterelement besonders vorteilhaft erweist sich eine Ausführungsform, bei welcher das Rohrelement als Hohlkörper, insbesondere als Hohlzylinder, ausgebildet ist, so dass am ersten Endabschnitt des Rohrelements eine erste Öffnung und dessen zweiten Endabschnitt eine zweite Öffnung vorhanden ist. Um ein dem Verclipsen mit dem Adapterelement vorangehendes Einsetzten des Rohrelements in das Adapterelement möglichst einfach zu gestalten und darüber hinaus sicherzustellen, dass sich das Rohrelement stabil am Adapterelement abzustützen vermag, bietet es sich an, das Rohrelement im Bereich des ersten Endabschnitts mit einem seine erste Öffnung einfassenden und vom Hohlkörper radial nach außen abstehenden ersten Rohrkragen auszustatten und an diesem ersten Rohrkragen einen in axialer Richtung von diesem abstehender zweiter Rohrkragen vorzusehen.

Gemäß einer weiterbildenden Ausführungsform sind Adapterelement und Rohrelement derart ausgebildet, dass sich in einem mittels der Clipverbindung aneinander befestigten Zustand der beiden Elemente der erste Rohrkragen des Rohrelements am Befestigungskragen des Adapterelements abstützt. In diesem Zustand greift die Rippe des Adapterelements in eine radial innen am zweiten Rohrkragen vorgesehene und sich entlang dessen Umfangsrichtung erstreckende Aufnahmenut ein. Aufnahmenut und Rippe wirken also in der Art einer Rastverbindung zusammen; um das Einrasten der Rippe in die Aufnahmenut bei der Montage des Rohrelements am Adapterelement zu erleichtern, können die beiden Bauelemente derart dimensioniert sein, dass die Rippe beim Einsetzen des Rohrelements in das Adapterelement gegen dessen hohlzylindrischen Grundkörper vorgespannt ist.

In dem am Adapterelement montierten Zustand des Rohrelements bilden der Innenraum des hohlzylindrischen Grundkörper des Adapterelements und der Hohlkörper des Rohrelements einen Fluidkanal aus, der von Kühlmittel durchströmt werden kann; um diesen fluidisch nach außen gegen die Umgebung abzudichten, empfiehlt es sich, in einer durch den Bereich zwischen Rippe und Befestigungskragen ausgebildeten Ausnehmung ein erstes Dichtungselement, insbesondere ein Dichtungsring, vorzusehen ist, welcher das Adapterelement gegen das Rohrelement abdichtet.

Um den Kühlerkasten gegen das Adapterelement abzudichten, kann alternativ oder zusätzlich zum ersten Dichtungselement ein zweites Dichtungselement vorgesehen werden. Auch dieses kann vorzugsweise als Dichtungsring ausgebildet und im Bereich des die Flanschplatten-Durchgangsöffnung einfassenden Rands angebracht werden, so dass es den Kühlerkasten gegen das Adapterelement abdichtet.

Bei einer konstruktiv bevorzugten Ausgestaltungsform sind der erste und zweite Endabschnitt des Rohrelements unter einem Winkel von 90° zueinander angeordnet. Dies kann etwa erreicht werden, in dem das gesamte Rohrelement rechtwinklig ausgebildet ist.

Die Erfindung betrifft ferner eine Frischluftanlage für eine Brennkraftmaschine. Die Frischluftanlage umfasst ein ausreichend dimensioniertes Gehäuse, welches in einen Ansaugkanal einer Brennkraftmaschine eingebunden sein kann, so dass das Gehäuse von der vor dem Einleiten in die Brennkammer zu kühlenden Ladeluft durchströmt wird. Die Frischluftanlage ist mit einem Ladeluftkühler mit einem oder mehreren der vorangehend erläuterten Merkmale ausgestattet. Im Gehäuse der Frischluftanlage ist eine Durchgangsöffnung vorgesehen, durch welche der Ladeluftkühler von außen in das Gehäuse einsetzbar ist, so dass der Ladeluftkühler im Inneren des Gehäuses angeordnet ist und die Flanschplatte die Durchgangsöffnung verschließt. In einer weiteren Ausführungsform ist das Ansauggehäuse mindestens zweischalig ausgebildet, wobei mindestens eine Schale Durchbrüche für die Stutzendurchführung aufweist. Auf eine Flanschplatte kann verzichtet werden. Die Montage des Kühlers erfolgt vorzugsweise vor dem Fügen der Ansauggehäuseschalen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Beispiel eines erfindungsgemäßen Ladeluftkühlers in einer Teilansicht,
- Fig. 2: den Ladeluftkühler der Figur 1 in einem Längsschnitt,
- Fig. 3: eine Beispiel für eine Frischluftanlage einer Brennkraftmaschine mit dem Ladeluftkühler der Figuren 1 und 2.

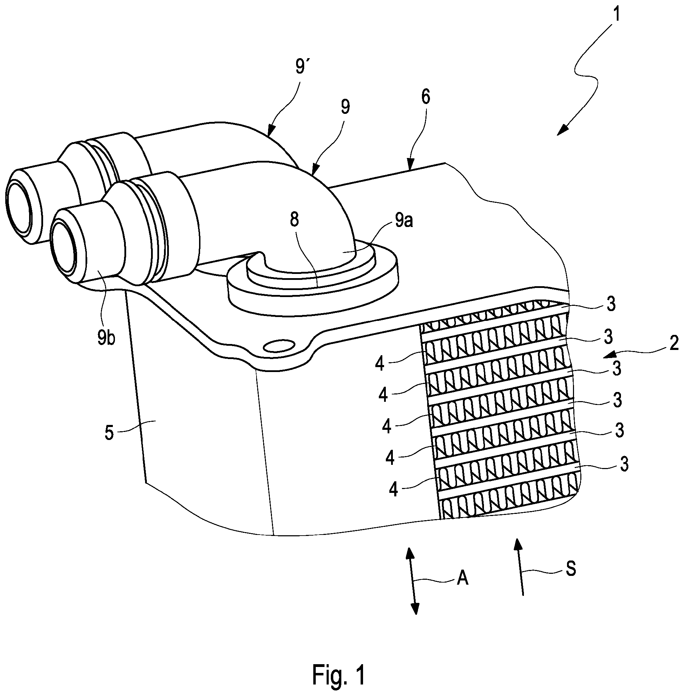

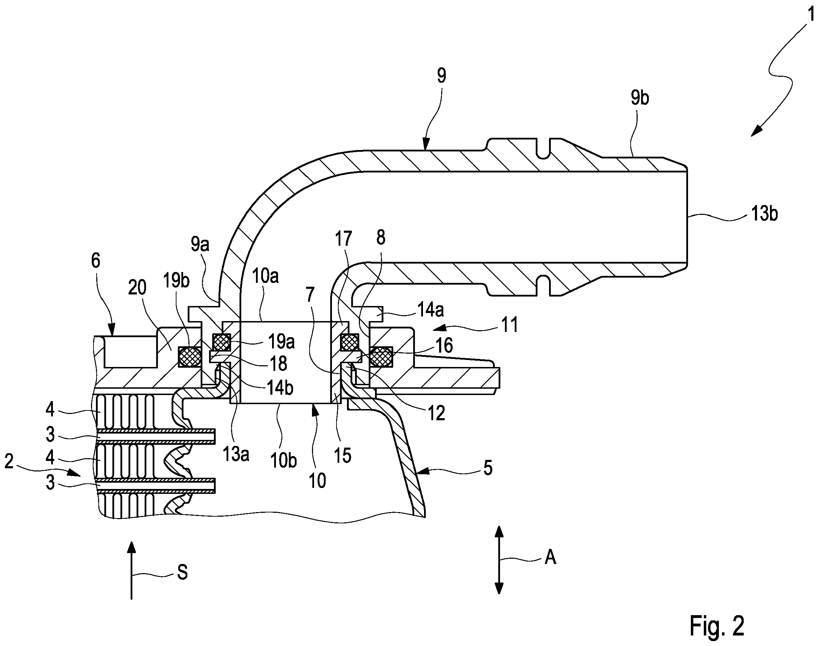

Die Figur 1 illustriert in perspektivischer Darstellung und in einer Teilansicht einen erfindungsgemäßen Ladeluftkühler 1, die Figur 2 zeigt den Ladeluftkühler 1 in einem Längsschnitt. Figur 1 zeigt dabei ausschnittsweise die wesentlichen Komponenten des Ladeluftkühler 1; zu nennen ist eine Rippe-Rohrstruktur 2 mit einer Mehrzahl von aufeinandergestapelten Flachrohren 3, zwischen welchen entlang einer Stapelrichtung S jeweils eine Rippenstruktur 4 vorgesehen ist. Die Flachrohre 3 werden in dem Fachmann bekannter Weise von einem Kühlmittel durchströmt, die Rippenstrukturen 4 selbst hingegen von der zu kühlenden Ladeluft.

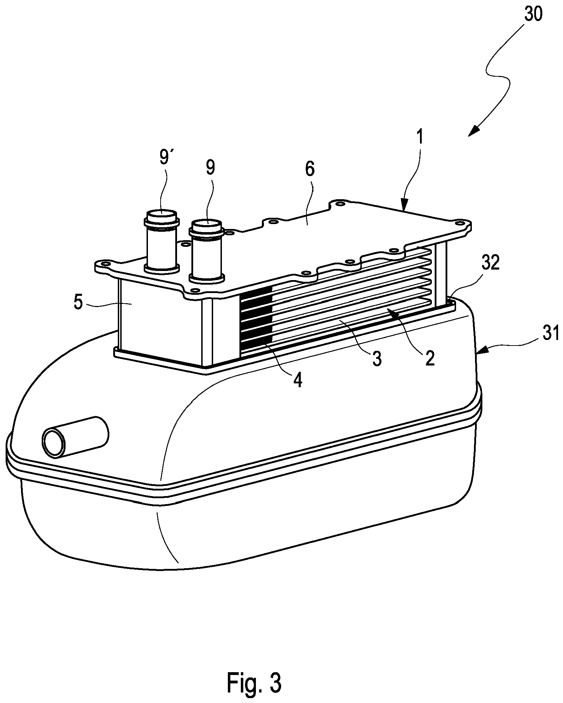

Zu nennen ist weiter ein mit der Rippe-Rohr-Struktur 2 verbundener Kühlerkasten 5, über welchen die Ein- und Ausleitung von Kühlmittel in die Flachrohre 3 erfolgt. Der Kühlerkasten ist an einer Flanschplatte 6 befestigt, mittels welcher der Ladeluftkühler 1 als Einheit in ein Gehäuse 31 einer Frischluftanlage 30 (vgl. Fig. 3) eingesetzt werden kann, um die durch die Frischluftanlage strömende Ladeluft zu kühlen. Der Kühlerkasten 5 ist mit einer Kühlerkasten-Durchgangsöffnung 7 versehen, die Flanschplatte 6 entsprechend mit einer Flanschplatten-Durchgangsöffnung 8, welche wiederum mit der Kühlerkasten-Durchgangsöffnung 7 fluchtet.

Die Ein- und Ausleitung von Kühlmittel in den Kühlerkaste 5 erfolgt mittels eines Rohrelements 9, welches mittels einer Clipverbindung 11 an einem am Kühlerkasten 5 angebrachtes Adapterelement 10 lösbar befestigt werden kann.

Das einen ersten und zweiten Endabschnitt 10a, 10b aufweisende Adapterelement 10 ist mit seinem zweiten Endabschnitt 10b in die Flanschplatten-Durchgangsöffnung 8 eingesetzt und stoffschlüssig, etwa mittels einer Löt- oder Schweißverbindung, mit einem die Kühlerkasten-Durchgangsöffnung 7 einfassenden Rand 12 des Kühlerkastens 5 verbunden. Kühlerkasten 5 und Adapterelement 10 sind zu diesem Zweck aus einem Metall hergestellt, so dass der zweite Endabschnitt 10b des Adapterelements 10 problemlos am Kühlerkasten 5 angelötet oder angeschweißt werden kann. Besonders empfiehlt sich dabei - aufgrund seines geringen Eigengewichts - die Verwendung von Aluminium als Material für die Herstellung von Kühlerkasten 5 und Adapterelement 10. Die Clipverbindung 11 zwischen Adapterelement 10 und Rohrelement 9 wird im Bereich der beiden ersten Endabschnitten 10a, 9a der beiden Bauelemente 10, 9 gebildet. Die beiden ersten Endabschnitte 10a, 9a von Rohrelement 10 bzw. Adapterelement 9 weisen hierzu eine im Wesentlichen komplementäre geometrische Formgebung auf.

Die Flanschplatte 6 ist wenigstens im Bereich eines die Flanschplatten-Durchgangsöffnung 8 einfassenden Rands aus Kunststoff hergestellt. In einer Variante kann die Flanschplatte 6 auch vollständig aus Kunststoff gefertigt sein. Im hier vorgestellten Beispielszenario ist ferner das Rohrelement 9 aus Kunststoff hergestellt. Folglich weisen Rohrelement 9 und Flanschplatte 6 denselben thermischen Ausdehnungskoeffizienten auf, so dass die beiden betriebsmäßig von Kühlmittel durchströmten und somit erheblichen Temperaturschwankungen ausgesetzten Bauelemente 9, 6 sich in demselben Maße ausdehnen bzw. kontrahieren. Auf diese Weise lassen sich temperaturbedingte, mechanische Spannungen an den Grenzflächen zwischen beiden Bauelementen 9, 6, welche die fluide Dichtigkeit an der Schnittstelle Flanschplatte-Rohrelement in Frage stellen könnten, weitgehend vermeiden. Zudem besitzt Kunststoff für die Ausbildung der Clipverbindung 11 vorteilhafte federelastische Materialeigenschaften.

Das Adapterelement 10 besitzt einen hohlzylindrischen Grundkörper 15; an dessen Außenseite ist eine radial nach außen abstehende und sich entlang der Umfangsrichtung des Grundkörpers 15 erstreckender Rippe 16 vorgesehen. Zusätzlich ist am ersten Endabschnitt 10a des Adapterelements 10 zur Ausbildung der Clipverbindung mit dem Rohrelement 9 ein radial nach außen vom Grundkörper 15 abstehender und sich entlang dessen Umfangsrichtung erstreckender Befestigungskragen 17 vorgesehen.

Das Rohrelement 9 ist als Hohlkörper in Form eines Hohlzylinders ausgebildet, so dass am ersten Endabschnitt 9a des Rohrelements 9 eine erste Öffnung 13a und dessen zweiten Endabschnitt 9b eine zweite Öffnung 13b vorhanden ist. Im Beispiel der Figur 2 sind der erste und zweite Endabschnitt 9a, 9b des Rohrelements 9 unter einem Winkel von 90° zueinander angeordnet. Zum Verclipsen des Rohrelements 9 mit dem Adapterelement 10 wird das Rohrelement 9 in das Adapterelement 10 eingesetzt. Hierzu ist das Rohrelement 9 im Bereich des ersten Endabschnitts 9a mit einem seine erste Öffnung 13a einfassenden und vom Hohlkörper radial nach außen abstehenden ersten Rohrkragen 14a versehen, an welchem wiederum in axialer Richtung A von diesem abstehender zweiter Rohrkragen 14b ausgeformt ist.

Das Adapterelement 10 und Rohrelement 9 sind ferner derart ausgebildet, dass sich in einem mittels der Clipverbindung 11 aneinander befestigten Zustand der beiden Bauelemente 9, 10 der erste Rohrkragen 14a des Rohrelements 9 am Befestigungskragen 17 des Adapterelements 10 abstützt. In diesem Zustand greift auch die Rippe 16 des Adapterelements 10 in eine radial innen am zweiten Rohrkragen 14b vorgesehene und sich entlang dessen Umfangsrichtung erstreckende Aufnahmenut 18 ein. Aufnahmenut 18 und Rippe 16 wirken in also in der Art einer Rastverbindung zusammen. Um bei Einsetzen des Rohrelements 9 ein Einrasten der Rippe 16 in die Aufnahmenut 18 am Adapterelement zu begünstigen, können die beiden Bauelemente derart dimensioniert sein, dass die Rippe 16 beim Einsetzen des Rohrelements 9 in das Adapterelement 10 gegen dessen hohlzylindrischen Grundkörper 15 vorgespannt ist.

In dem in den Figuren 1 und 2 dargestellten, am Adapterelement 10 montierten Zustand des Rohrelements 9 bildet der Innenraum des hohlzylindrischen Grundkörpers 15 des Adapterelements 10 zusammen mit dem Hohlkörper des Rohrelements 9 einen Fluidkanal aus, der von Kühlmittel durchströmt werden kann; um ist in einer durch den Bereich zwischen Rippe 16 und Befestigungskragen 17 ausgebildeten Ausnehmung ein als Dichtungsring ausgebildetes Dichtungselement 19a angeordnet, das das Adapterelement 10 gegen das Rohrelement 9 abdichtet.

Um in analoger Weise den Kühlerkasten 5 gegen das Adapterelement 10 abzudichten, ist im Bereich des die Flanschplatten-Durchgangsöffnung 8 einfassenden Rands 12 zusätzlich ein zweites Dichtungselement 19b vorgesehen.

Der Figur 1 entnimmt man ferner, dass am Ladeluftkühler 1 nicht nur ein einziges Rohrelement 9 vorgesehen ist, welches zum Einleiten von Kühlmittel in den Kühlerkasten dient, sondern zusätzlich zu diesem ein zweites Rohrelement 9', mittels welchem das Kühlmittel nach dem Wärmeaustausch mit der zu kühlenden Ladeluft wieder aus dem Kühlerkasten 5 ausgeleitet wird. Der Aufbau des Rohrelements 9' entspricht jenem des oben erläuterten Rohrelements 9; dies gilt ausdrücklich auch für die erfindungsgemäße Befestigung des Rohrelements 9' am Kühlerkasten 5 mittels eines Adapterelements; alle obigen Erläuterungen in Bezug auf das Rohrelement 9 gelten somit mutatis mutandis auch für das Rohrelement 9'.

Figur 3 illustriert schließlich exemplarisch den Einsatz des erfindungsgemäßen Ladeluftkühlers 1 in einer Frischluftanlage 30 einer Brennkraftmaschine. Diese umfasst ein Gehäuse 31 zum Einleiten von Ladeluft in eine Brennkammer der Brennkraftmaschine (nicht gezeigt) sowie den erfindungsgemäßen Ladeluftkühler 1. Im Gehäuse 31 ist eine Durchgangsöffnung 32 vorgesehen, durch welche der Ladeluftkühler 1 als Einheit von außen in das Gehäuse 31 einsetzbar ist, so dass der Ladeluftkühler 1 im Inneren des Gehäuses 31 angeordnet ist und die Flanschplatte 6 die Durchgangsöffnung 32 verschließt.

## Patentansprüche

1. Ladeluftkühler (1) für eine Frischluftanlage einer Brennkraftmaschine,
- mit einem Kühlerkasten (5), welcher wenigstens eine Kühlerkasten-Durchgangsöffnung (7) aufweist,
- mit einer Oberschale (6), in welcher wenigstens eine Flanschplatten-Durchgangsöffnung (8) vorgesehen ist, welche mit der Kühlerkasten-Durchgangsöffnung (7) fluchtet,
- mit einem einen ersten und zweiten Endabschnitt (10a, 10b) aufweisenden Adapterelement (10), welches mit dem zweiten Endabschnitt (10b) in die Flanschplatten-Durchgangsöffnung (8) eingesetzt und stoffschlüssig mit einem die Kühlerkasten-Durchgangsöffnung (7) einfassenden Rand (12) des Kühlerkastens (5) verbunden ist,
- mit einem einen ersten und zweiten Endabschnitt (9a, 9b) aufweisenden und an dem Adapterelement (10) lösbar befestigbaren Rohrelement (9), **dadurch gekennzeichnet, dass** die beiden ersten Endabschnitte (10a, 9a) von Adapterelement (10) und Rohrelement (9) in einem aneinander befestigten Zustand eine Clipverbindung ausbilden.

2. Ladeluftkühler nach Anspruch 1,
**dadurch gekennzeichnet, dass**
der Kühlerkasten (5) und das Adapterelement (10) jeweils aus einem Metall, insbesondere aus Aluminium, hergestellt sind, wobei der zweite Endabschnitt (10b) des Adapterelements (10) und der Kühlerkasten (5) stoffschlüssig, insbesondere mittels Verlöten oder Verschweißen, aneinander befestigt sind.

3. Ladeluftkühler nach Anspruch 1 oder 2,
**dadurch gekennzeichnet, dass**
- die Flanschplatte (6) wenigstens in einem die Flanschplatten-Durchgangsöffnung (8) einfassenden Randbereich aus einem Kunststoff hergestellt ist, und/oder dass
- das Rohrelement (9) aus einem Kunststoff hergestellt ist.

4. Ladeluftkühler nach einem der Ansprüche 1 bis 3,
**dadurch gekennzeichnet, dass**
die beiden ersten Endabschnitte (9a, 10a) von Rohrelement (9) und Adapterelement (10) eine im Wesentlichen komplementär zueinander ausgestaltete geometrische Formgebung aufweisen.

5. Ladeluftkühler nach einem der vorhergehenden Ansprüche,
**dadurch gekennzeichnet, dass**
- das Adapterelement (10) einen hohlzylindrischen Grundkörper (15) aufweist, an dessen Außenseite eine radial nach außen abstehende und sich entlang der Umfangsrichtung des Grundkörpers (15) erstreckender Rippe (16) vorgesehen ist,
- am ersten Endabschnitt (10a) des Adapterelements (10) ein radial nach außen vom Grundkörper (15) abstehender und sich entlang dessen Umfangsrichtung erstreckender Befestigungskragen (17) vorgesehen ist.

6. Ladeluftkühler nach einem der vorhergehenden Ansprüche,
**dadurch gekennzeichnet, dass**
- das Rohrelement (9) als Hohlkörper, insbesondere als Hohlzylinder, ausgebildet ist, wobei am ersten Endabschnitt (9a) eine erste Öffnung (13a) und am zweiten Endabschnitt (9b) eine zweite Öffnung (13b) vorgesehen ist,
- das Rohrelement (9) im Bereich des ersten Endabschnitts (9a) einen die erste Öffnung (13a) einfassenden und vom Hohlkörper radial nach außen abstehenden ersten Rohrkragen (14a) aufweist,
- am ersten Rohrkragen (14a) ein in axialer Richtung (A) von diesem abstehender zweiter Rohrkragen (14b) vorgesehen ist.

7. Ladeluftkühler nach Anspruch 6,
**dadurch gekennzeichnet, dass**
sich im am Adapterelement (10) montierten Zustand des Rohrelements (9) zur Ausbildung der Clipverbindung
- der erste Rohrkragen (14a) des Rohrelements (9) am Befestigungskragen (17) des Adapterelements (10) abstützt, und
- die Rippe des Adapterelements (10) in eine radial innen am zweiten Rohrkragen (14b) vorgesehene und sich entlang dessen Umfangsrichtung erstreckende Aufnahmenut (18) eingreift.

8. Ladeluftkühler nach einem der Ansprüche 5 bis 7,
**dadurch gekennzeichnet, dass**
in einer durch den Bereich zwischen Rippe (16) und Befestigungskragen (17) ausgebildeten Ausnehmung ein (erstes) Dichtungselement (19a), insbesondere ein erster Dichtungsring, aufgenommen ist, welches das Adapterelement (10) gegen das Rohrelement (9) abdichtet.

9. Ladeluftkühler nach einem der vorhergehenden Ansprüche,
**dadurch gekennzeichnet, dass**
im Bereich eines die Flanschplatten-Durchgangsöffnung (8) einfassenden Rands (20) ein (zweites) Dichtungselement (19b), insbesondere ein zweiter Dichtungsring, vorgesehen ist, welches den Kühlerkasten (5) gegen das Adapterelement (10) abdichtet.

10. Ladeluftkühler nach einem der vorhergehenden Ansprüche,
**dadurch gekennzeichnet, dass**
das Rohrelement (9) rechtwinklig ausgebildet ist.

11. Frischluftanlage (30) für eine Brennkraftmaschine,
- mit einem Gehäuse (31) zum Einleiten von Ladeluft in eine Brennkammer der Brennkraftmaschine,
- mit einem Ladeluftkühler (1) nach einem der vorhergehenden Ansprüche,
- wobei im Gehäuse (31) eine Durchgangsöffnung (32) vorgesehen ist, durch welche der Ladeluftkühler (1) von außen in das Gehäuse (31) einsetzbar ist, so dass der Ladeluftkühler (1) im Inneren des Gehäuses (31) angeordnet ist und dessen Flanschplatte (6) die Durchgangsöffnung (32) verschließt.

12. Brennkraftmaschine mit einer Frischluftanlage nach Anspruch 11.

## Claims

1. Intercooler (1) for a fresh air system of an internal combustion engine,
- with a cooler box (5) that has at least one cooler box passage opening (7),
- with an upper shell (6), in which at least one flange plate passage opening (8) is provided, which is aligned with the cooler box passage opening (7),
- with an adapter element (10) having a first and second end section (10a, 10b), which is inserted into the flange plate passage-opening (8) with the second end section (10b) and is connected by material bonding with an edge (12) of the cooler box (5) enclosing the cooler box passage-opening (7),
- with a tubular element (9) having a first and second end section (9a, 9b) and detachably fastened to the adapter element (10), **characterised in that**
the two first end sections (10a, 9a) of adapter element (10) and tubular element (9) form a clip connection in a fastened state to one another.

2. Intercooler according to claim 1, **characterised in that** the cooler box (5) and the adapter element (10) are each made of a metal, in particular of aluminium, wherein the second end section (10b) of the adapter element (10) and the cooler box (5) are connected together by material bonding, in particular by means of soldering or welding.

3. Intercooler according to claim 1 or 2, **characterised in that**
- the flange plate (6) is made of a plastic at least in an edge section enclosing the flange plate passage opening (8), and/or that
- the tubular element (9) is made of a plastic.

4. Intercooler according to one of claims 1 to 3, **characterised in that** the two first end sections (9a, 10a) of tubular element (9) and adapter element (10) in design have a geometric shape - essentially complementary to each other.

5. Intercooler according to one of the preceding claims, **characterised in that**
- the adapter element (10) has a hollow-cylindrical main body (15), by which on the outer side a rib (16) projecting radially outwards and extending along the circumferential direction of the main body (15) is provided,
- on the first end section (10a) of the adapter element (10) a fastening collar (17) projecting radially outwardly from the main body (15) and extending along its circumferential direction is provided.

6. Intercooler according to one of the preceding claims, **characterised in that**
- the tubular element (9) is formed as a hollow body, in particular as a hollow cylinder, wherein on the first end section (9a) a first opening (13a) and on the second end section (9b) a second opening (13b) is provided,
- the pipe element (9) in the area of the first end section (9a) has a first tubular collar (14a) enclosing the first opening (13a) and projecting radially outward from the hollow body,
- on the first tubular collar (14a), a second tubular collar (14b) - projecting in the axial direction (A) from the latter - is provided.

7. Intercooler according to claim 6, **characterised in that**, in the mounted state of the tubular element (9) for forming the clip connection in the adapter element (10),
- the first tubular collar (14a) of the tubular element (9) is supported on the fastening collar (17) of the adapter element (10), and
- the rib of the adapter element (10) engages in a receiving groove (18) provided radially inside on the second tubular collar (14b) and extending along its circumferential direction.

8. Intercooler according to one of claims 5 to 7, **characterised in that** in a recess formed by the area between the rib (16) and fastening collar (17) a (first) sealing element (19a), in particular a first sealing ring, is accommodated, which seals the adapter element (10) against the tubular element (9).

9. Intercooler according to one of the preceding claims, **characterised in that** in the area of an edge (20) enclosing the flange plate passage opening (8), a (second) sealing element (19b), in particular a second sealing ring, is provided, which seals the cooler box (5) against the adapter element (10).

10. Intercooler according to one of the preceding claims, **characterised in that** the tubular element (9) is formed right angled.

11. Fresh air system (30) for an internal combustion engine,
- with a housing (31) for inlet of charge air into a combustion chamber of the internal combustion engine,
- with a charge air cooler (1) according to one of the preceding claims,
- wherein in the housing (31) a passage opening (32) is provided, through which the intercooler (1) can be inserted from outside into the housing (31), so that the intercooler (1) is disposed in the interior of the housing (31) and its flange plate (6) closes the passage opening (32).

12. Internal combustion engine with a fresh air system according to claim 11.

## Revendications

1. Refroidisseur d'air de suralimentation (1) pour une installation d'air frais d'un moteur à combustion interne,
- avec un boîtier de refroidisseur (5), lequel présente au moins une ouverture de passage de boîtier de refroidisseur (7),
- avec une coque supérieure (6), dans laquelle au moins une ouverture de passage de plaque de collet (8) est prévue, laquelle est alignée avec l'ouverture de passage de boîtier de refroidisseur (7),
- avec un élément d'adaptateur (10) présentant un premier et deuxième tronçon d'extrémité (10a, 10b), lequel est inséré avec le deuxième tronçon d'extrémité (10b) dans l'ouverture de passage de plaque de collet (8) et relié par correspondance de matière à un bord (12) du boîtier de refroidisseur (5) bordant l'ouverture de passage de boîtier de refroidisseur (7),
- avec un élément tubulaire (9) présentant un premier et deuxième tronçon d'extrémité (9a, 9b) et pouvant être fixé de manière amovible à l'élément d'adaptateur (10), **caractérisé en ce que**
les deux premiers tronçons d'extrémité (10a, 9a) d'élément d'adaptateur (10) et de l'élément tubulaire (9) forment une liaison par clipsage dans un état fixé l'un à l'autre.

2. Refroidisseur d'air de suralimentation selon la revendication 1,
**caractérisé en ce que**
le boîtier de refroidisseur (5) et l'élément d'adaptateur (10) sont fabriqués respectivement en un métal, en particulier en aluminium, dans lequel le deuxième tronçon d'extrémité (10b) de l'élément d'adaptateur (10) et du boîtier de refroidisseur (5) sont fixés l'un à l'autre par correspondance de matière, en particulier par brasage ou soudage.

3. Refroidisseur d'air de suralimentation selon la revendication 1 ou 2,
**caractérisé en ce que**
- la plaque de collet (6) est fabriquée en une matière plastique au moins dans une zone de bord bordant l'ouverture de passage de plaque de collet (8), et/ou que
- l'élément tubulaire (9) est fabriqué en une matière plastique.

4. Refroidisseur d'air de suralimentation selon l'une quelconque des revendications 1 à 3,
**caractérisé en ce que**
les deux premiers tronçons d'extrémité (9a, 10a) de l'élément tubulaire (9) et de l'élément d'adaptateur (10) présentent une forme géométrique configurée de manière sensiblement complémentaire l'une à l'autre.

5. Refroidisseur d'air de suralimentation selon l'une quelconque des revendications précédentes,
**caractérisé en ce que**
- l'élément d'adaptateur (10) présente un corps de base cylindrique creux (15), au niveau du côté extérieur duquel une nervure (16) dépassant radialement vers l'extérieur et s'étendant le long de la direction périphérique du corps de base (15) est prévue,
- un collet de fixation (17) dépassant radialement vers l'extérieur du corps de base (15) et s'étendant le long de sa direction périphérique est prévu au niveau du premier tronçon d'extrémité (10a) de l'élément d'adaptateur (10).

6. Refroidisseur d'air de suralimentation selon l'une quelconque des revendications précédentes,
**caractérisé en ce que**
- l'élément tubulaire (9) est réalisé en tant que corps creux, en particulier en tant que cylindre creux, dans lequel une première ouverture (13a) est prévue au niveau du premier tronçon d'extrémité (9a) et une deuxième ouverture (13b) au niveau du deuxième tronçon d'extrémité (9b),
- l'élément tubulaire (9) présente dans la zone du premier tronçon d'extrémité (9a) un premier collet tubulaire (14a) bordant la première ouverture (13a) et dépassant du corps creux radialement vers l'extérieur,
- au niveau du premier collet tubulaire (14a), un deuxième collet tubulaire (14b) dépassant de celui-ci dans la direction axiale (A) est prévu.

7. Refroidisseur d'air de suralimentation selon la revendication 6,
**caractérisé en ce que**
à l'état monté au niveau de l'élément d'adaptateur (10) de l'élément tubulaire (9) pour la formation de la liaison par clipsage
- le premier collet tubulaire (14a) de l'élément tubulaire (9) s'appuie au niveau du collet de fixation (17) de l'élément d'adaptateur (10), et
- la nervure de l'élément d'adaptateur (10) se met en prise avec une rainure de réception (18) prévue radialement à l'intérieur au niveau du deuxième collet tubulaire (14b) et s'étendant le long de sa direction périphérique.

8. Refroidisseur d'air de suralimentation selon l'une quelconque des revendications 5 à 7,
**caractérisé en ce que**
un (premier) élément d'étanchéité (19a), en particulier une première bague d'étanchéité, lequel rend l'élément d'adaptateur (10) étanche contre l'élément tubulaire (9), est reçu dans un évidement formé par la zone entre la nervure (16) et le collet de fixation (17).

9. Refroidisseur d'air de suralimentation selon l'une quelconque des revendications précédentes,
**caractérisé en ce que**
un (deuxième) élément d'étanchéité (19b), en particulier une deuxième bague d'étanchéité, lequel rend le boîtier de refroidisseur (5) étanche contre l'élément d'adaptateur (10), est prévu dans la zone d'un bord (20) bordant l'ouverture de passage de plaque de collet (8).

10. Refroidisseur d'air de suralimentation selon l'une quelconque des revendications précédentes,
**caractérisé en ce que**
l'élément tubulaire (9) est réalisé à angle droit.

11. Installation d'air frais (30) pour un moteur à combustion interne,
- avec un boîtier (31) pour l'introduction d'air de suralimentation dans une chambre de combustion du moteur à combustion interne,
- avec un refroidisseur d'air de suralimentation (1) selon l'une quelconque des revendications précédentes,
- dans lequel une ouverture de passage (32) est prévue dans le boîtier (31), par laquelle le refroidisseur d'air de suralimentation (1) peut être inséré de l'extérieur dans le boîtier (31), de sorte que le refroidisseur d'air de suralimentation (1) est agencé à l'intérieur du boîtier (31) et sa plaque de collet (6) ferme l'ouverture de passage (32).

12. Moteur à combustion interne avec une installation d'air frais selon la revendication 11.
